# EUROPÄISCHE PATENTSCHRIFT

(11) **EP 3 472 024 B1**
(45) Veröffentlichungstag und Bekanntmachung des Hinweises auf die Patenterteilung: **28.04.2021**
(21) Anmeldenummer: 17734005.6
(22) Anmeldetag: 16.06.2017
(51) Int. Cl.: B62D 1/20, B62D 1/16, F16D 3/06, F16C 3/03

(54) **TELESKOPIERBARE LENKWELLE MIT AUSZUGSSICHERUNG**
TELESCOPIC STEERING SHAFT WITH A PULL-OUT SAFEGUARD
ARBRE DE DIRECTION TÉLESCOPIQUE À SÉCURITÉ ANTI-EXTRACTION

(30) Priorität: 17.06.2016 DE 102016111178; 02.11.2016 DE 102016221451
(43) Veröffentlichungstag der Anmeldung: 24.04.2019
(73) Patentinhaber: thyssenkrupp Presta AG, 9492 Eschen (LI); thyssenkrupp AG, 45143 Essen (DE)
(72) Erfinder: MÄRK, Robert Josef, 6800 Feldkirch (AT)
(74) Vertreter: thyssenkrupp Intellectual Property GmbH
(86) Internationale Anmeldenummer: PCT/EP2017/064783
(87) Internationale Veröffentlichungsnummer: WO 2017/216351

(56) Entgegenhaltungen:
- DE-A1-102004 009 188
- US-B2- 9 157 482

## Beschreibung

Die Erfindung betrifft eine Lenkwelle für ein Kraftfahrzeug, mit einem Außenwellenteil, in dem ein Innenwellenteil drehmomentschlüssig und axial verstellbar aufgenommen ist, mit mindestens einem von der Außenseite des Innenwellenteils radial nach außen vorspringenden axialen Innenanschlag, der beim Herausziehen des Innenwellenteils aus dem Außenwellenteil an mindestens einen von der Innenseite des Außenwellenteils radial nach innen vorspringenden axialen Außenanschlag anschlägt, so dass der axiale Verschiebeweg des Innenwellenteils im Außenwellenteil in Auszugsrichtung begrenzt ist, wobei der mindestens eine Außenanschlag durch mindestens einen Umformprozess in einen Endabschnitt des Außenwellenteils eingebracht ist, wobei die Achse der Einbringrichtung jeweils mit der Radialrichtung des Außenwellenteils einen Winkel von mehr als 20° bildet.

Eine gattungsgemäße Lenkwelle ist aus der US 9,157,482 B2 bekannt. Nachteilig an dieser Lösung ist die komplizierte und aufwändige Einbringung einer Verstemmung in der Stirnfläche der Außenwelle. Nachteilig ist außerdem, dass das Außenwellenteil durch den Umformprozess zur Erzeugung des Außenanschlags deformiert werden kann, wodurch die Betriebssicherheit der Lenkwelle beeinträchtigt werden kann.

Aufgabe der Erfindung ist es, eine verbesserte Auszugssicherung für eine Lenkwelle bereitzustellen, die einfach herstellbar ist.

Die erfindungsgemäße Lösung sieht vor, dass der oder die Außenanschläge jeweils durch einen Umformprozess in eine Stirnfläche des Außenwellenteils eingebracht sind, wobei die Achse der Einbringrichtung in einer die Drehachse des Außenwellenteils einschließenden Ebene liegt.

Würde man für den Umformprozess mit einem Umformwerkzeug direkt in Radialrichtung auf das Außenwellenteil einwirken, könnte sich das Außenwellenteil insgesamt verformen und sich am Innenwellenteil verklemmen, so dass das Innenwellenteil im Außenwellenteil nicht mehr leicht und gleichmäßig verschieblich ist und für die Verschiebung erhebliche Kräfte aufgebracht werden müssten. Die erfindungsgemäße Maßnahme hingegen hat den Vorteil, dass beim Umformprozess zur Erzeugung des Außenanschlags nur eine verminderte Radialkomponente der in Einbringrichtung wirkenden Umformkraft des jeweiligen Werkzeugs in Radialrichtung wirkt und damit die Gefahr von großräumigen ungewollten Deformierung des Außenwellenteils erheblich verringert wird. Mit Vorteil bleibt daher die zum Verschieben des Innenwellenteils im Außenwellenteil erforderliche Kraft gering.

Auch wenn die Erfindung grundsätzlich mit einem einzigen Innenanschlag des Innenwellenteils, der mit einem einzigen Außenanschlag des Außenwellenteils zusammen wirkt, realisiert werden kann, so ist doch aus Symmetriegründen zur Vermeidung von Verkantungen oder Verbiegungen der beiden Wellenteile eine Anordnung vorzuziehen, wonach zwei Innenanschläge auf dem Innenwellenteil und zwei den Innenanschlägen zugeordnete Außenanschläge auf dem Außenwellenteil in Umfangsrichtung im Abstand von 180° angeordnet sind. Die Erfindung umfasst aber auch Ausführungsformen, bei denen drei, vier oder mehr Innenanschläge mit einer entsprechenden Anzahl von Außenanschlägen zusammen wirken.

Bevorzugt ist der Winkel kleiner als 80°, besonders bevorzugt ist der Winkel kleiner als 60°. Im Idealfall weist der Winkel einen Wert zwischen 40° und 50° auf. Dadurch lässt sich der Einfluss der während der Erzeugung wirkenden radialen Kraftkomponente weiter verringern, so dass die Kraft, die zur Verschiebung der Innenwelle zu der Aussenwelle nach der Erzeugung des Außenanschlags erforderlich ist, weitestgehend der Kraft zur Verschiebung der Innenwelle zu der Aussenwelle vor der Erzeugung des Außenanschlags entspricht. In einer zweiten Ausführungsform der Erfindung werden der oder die Außenanschläge jeweils durch einen Umformprozess in eine Stirnfläche des Außenwellenteils eingebracht, wobei die Achse der Einbringrichtung in einer die Drehachse des Außenwellenteils einschließenden Ebene liegt. Bei dieser Anordnung wirkt das Umformwerkzeug auf die Stirnfläche des Außenwellenteils ein, wobei die Umformkräfte eine große Komponente aufweisen, die in Längsrichtung in das Außenwellenteil eingeleitet wird. Mit Vorteil ist der auf das Außenwellenteil einwirkende Radialteil der Umformkraft geringer als die gesamte Umformkraft. In einer dritten Ausführungsform der Erfindung werden der oder die Außenanschläge jeweils durch einen Umformprozess in den Außenumfang des Außenwellenteils eingebracht, wobei die Achse der Einbringrichtung in einer die Drehachse des Außenwellenteils einschließenden Ebene liegt. Der Unterschied zum zweiten Ausführungsbeispiel besteht darin, dass jetzt das Umformwerkzeug an der Außenmantelfläche des Außenwellenteils angreift und nicht an der Stirnfläche. Die Auswirkungen für die Verringerung der Radialkraft sind aber dieselben wie beim zweiten Ausführungsbeispiel.

In einer vierten Ausführungsform der Erfindung werden der oder die Außenanschläge jeweils durch einen Umformprozess in einen die Stirnfläche und den Außenumfang einschließenden Bereich des Außenwellenteils eingebracht, wobei die Achse der Einbringrichtung in einer die Drehachse des Außenwellenteils einschließenden Ebene liegt. Das vierte Ausführungsbeispiel kann als eine Kombination des zweiten und dritten Ausführungsbeispiels gesehen werden, denn das Umformwerkzeug wirkt hier sowohl auf die Stirnfläche als auch auf die Umfangsmantelfläche des Außenwellenteils ein. Die Auswirkungen für die Radialkomponente der Verformungskraft und die damit verbundenen Vorteile sind dieselben wie bei den Ausführungsbeispielen 2 und 3.

In einer fünften Ausführungsform der Erfindung sind die Außenanschläge jeweils durch einen Umformprozess in den jeweiligen Endbereich einer Längsverzahnung auf der Innenseite des Außenwellenteils eingebracht, wobei die Achse der Einbringrichtung in einer im Wesentlichen tangential zur Außenseite des Innenwellenteils angeordneten Ebene liegt. Diese Ausführungsform nützt die Tatsache, dass die Längsverzahnungen des Außenwellenteils bereits vorhanden sind.

Die Erfindung umfasst auch ein Verfahren zur Herstellung einer Auszugsicherung einer Lenkwelle nach einem der oben beschriebenen Ausführungsformen, bei dem ein mit mindestens einem von seiner Außenseite radial nach außen vorspringenden axialen Innenanschlag versehenes Innenwellenteil in ein Außenwellenteil eingeschoben und anschließend in das Außenwellenteil mindestens ein von der Innenseite des Außenwellenteils radial nach innen vorspringende axiale Außenanschlag eingeformt wird, wobei der Außenanschlag durch einen Prägevorgang eines Formwerkzeugs eingebracht wird, wobei die Achse der Einbringrichtung, in die das Formwerkzeug bewegt wird, mit der Radialrichtung des Außenwellenteils einen Winkel von mehr als 20° bildet.

Zur Lösung der Aufgabe, eine gattungsgemäße Lenkwelle für ein Kraftfahrzeug herzustellen, wobei das Verfahren einfach sein soll und Verformungen des Außenwellenteils zu vermeiden sind, wird vorgeschlagen, dass zwei erste Formwerkzeuge auf zwei benachbarte Stellen des Außenumfangs des Außenwellenteils einwirken, wobei die Achsen der beiden Einbringrichtungen in einer zur Drehachse des Außenwellenteils orthogonalen Ebene liegen und sich in einem radial zwischen der Drehachse und dem Außenumfang des Außenwellenteils angeordneten Punkt schneiden.

Das Verfahren verringert die Radialkomponente der Verformungskraft, wodurch ungewollte Verformungen des Außenwellenteils, die zum Beispiel einen ovalen Querschnitt des Außenwellenteils erzeugen könnten, vermieden werden.

Die Gefahr von Verformungen und Verkantungen des Außenwellenteils mit dem Innenwellenteil kann verringert werden durch die Maßnahme, dass in das Außenwellenteil zwei in Umfangsrichtung im Abstand von 180° angeordnete Außenanschläge eingeformt werden. Eine zweite Ausführung des erfindungsgemäßen Verfahrens sieht vor, dass ein zweites Formwerkzeug auf eine Stirnfläche des Außenwellenteils einwirkt, wobei die Achse der Einbringrichtung in einer die Drehachse des Außenwellenteils einschließenden Ebene liegt. Bei dieser Ausführungsform wird eine große Komponente der einwirkenden Verformungskraft des Formwerkzeugs in Längsrichtung in die Rohrwand des Außenwellenteils eingeleitet, welches in dieser Richtung nur sehr schwer verformbar ist. Mit Vorteil wird dadurch die auf das Außenwellenteil einwirkende Radialkraft verringert, die ansonsten Veränderungen des Querschnitts des Außenwellenteils bewirken könnte.

Die gleichen Vorteile wie beim vorbeschriebenen Verfahren hat eine dritte Ausführung des erfindungsgemäßen Verfahrens, wonach ein drittes Formwerkzeug auf den Außenumfang des Außenwellenteils einwirkt, wobei die Achse der Einbringrichtung in einer die Drehachse des Außenwellenteils einschließenden Ebene liegt.

Bei einer vierten Ausführung eines erfindungsgemäßen Verfahrens ist vorgesehen, dass ein viertes Formwerkzeug auf einen den Außenumfang an die Stirnfläche des Außenwellenteils einschließenden Bereich des Außenwellenteils einwirkt, wobei die Achse der Einbringrichtung in einer die Drehachse des Außenwellenteils einschließenden Ebene liegt. Bei dieser Kombination der Verfahren gemäß den Ausführungsbeispielen zwei und drei ergeben sich wieder dieselben Vorteile hinsichtlich der Verringerung der Radialkomponente der Prägekraft und damit der geringeren Wahrscheinlichkeit einer Verformung des Querschnitts des Außenwellenteils.

Bei einer fünften Ausführung eines erfindungsgemäßen Verfahrens ist vorgesehen, dass ein fünftes Formwerkzeug auf einen Endbereich einer Längsverzahnung auf der Innenseite des Außenwellenteils einwirkt, wobei die Achse der Einbringrichtung in einer im Wesentlichen tangential zur Außenseite des Innenwellenteils angeordneten Ebene liegt. Die dabei einwirkende Umformkraft hat praktisch überhaupt keine Radialkomponente. Dabei ist es besonders vorteilhaft, wenn zwei Umformprozesse an zwei benachbarten Längsverzahnungen durch zwei Umformwerkzeuge durchgeführt werden, wobei die jeweiligen Einbringrichtungen zueinander einen Winkel von mehr als 90° bilden.

Ausführungsbeispiele der Erfindung werden nachfolgend anhand der Zeichnungen näher erläutert. Die Figuren zeigen im Einzelnen:
- Figur 1:: eine schematische Darstellung einer Lenkvorrichtung für Kraftfahrzeuge mit einer mehrteiligen teleskopierbaren Lenkwelle;
- Figur 2:: ein teleskopierbarer Lenkwelle der Lenkvorrichtung mit einem in einem Außenwellenteil verschiebbaren Innenwellenteil;
- Figur 3:: eine Darstellung ähnlich Figur 2, bei der das Innenwellenteil aus dem Außenwellenteil herausgezogen ist;
- Figur 4:: ein Detail einer Auszugsicherung von Außenwellenteil und Innenwellenteil in geschnittener Darstellung;
- Figur 5:: eine perspektivische Darstellung einer Auszugsicherung zwischen Außenwellenteil und Innenwellenteil;
- Figur 6:: einen Querschnitt durch ein Außenwellenteil mit eingeschobenem Innenwellenteil während der Einformung eines Außenanschlags in das Außenwellenteil;
- Figur 7:: eine perspektivische Detailansicht einer Auszugsicherung zwischen Außenwellenteil und Innenwellenteil in einer zweiten Ausführungsform;
- Figur 8:: eine perspektivische Detailansicht eines Außenwellenteils mit eingeformtem Außenanschlag;
- Figur 9:: ein Detail eines Längsschnitts durch ein Außenwellenteil mit darin eingeschobenem Innenwellenteil während der Einformung eines Außenanschlags in das Außenwellenteil, in einer zweiten Ausführungsform;
- Figur 10:: eine perspektivische Detailansicht eines Außenwellenteils mit eingeschobenem Innenwellenteil und einer Auszugsicherung, in einer dritten Ausführungsform;
- Figur 11:: eine Teilansicht des Außenwellenteils mit eingeschobenem Innenwellenteil im Längsschnitt während der Einformung eines Außenanschlags in das Außenwellenteil, in einer dritten Ausführungsform;
- Figur 12:: eine perspektivische Detailansicht eines Außenwellenteils mit eingeschobenem Innenwellenteil und Auszugsicherung in einer vierten Ausführungsform;
- Figur 13:: eine Detailansicht eines Außenwellenteils mit eingeschobenem Innenwellenteil im Längsschnitt während des Einformens eines Außenanschlags in das Außenwellenteil, in einer vierten Ausführungsform;
- Figur 14:: eine perspektivische Detailansicht eines Außenwellenteils mit eingeschobenem Innenwellenteil und Auszugsicherung in einer fünften Ausführungsform;
- Figur 15:: ein vergrößertes Detail aus Figur 14 mit Umformwerkzeug;
- Figur 16:: eine Draufsicht auf das Außenwellenteil mit eingeschobenem Innenwellenteil von Figur 14 mit Umformwerkzeug.

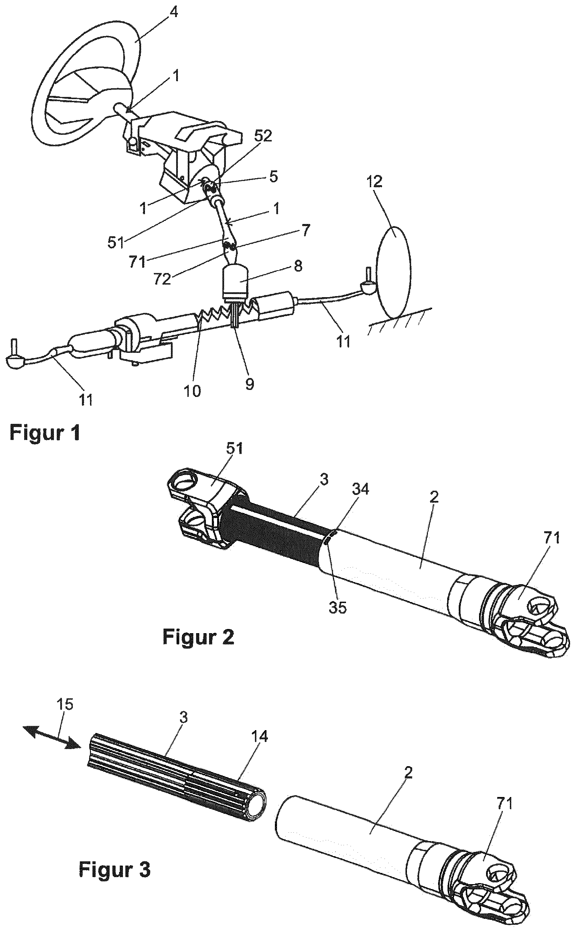

In Figur 1 ist eine Lenkvorrichtung für ein Kraftfahrzeug dargestellt, bei der eine Lenkwelle 1 an einem Ende mit einem Lenkrad 4 und an ihrem anderen Ende über ein als Universalgelenk ausgebildetes Drehgelenk 5 mit einer Lenkwelle 1 verbunden ist. Die Lenkwelle 1 ist über ein weiteres als Universalgelenk ausgebildetes Drehgelenk 7 mit einer Eingangswelle eines Lenkgetriebes 8 verbunden, welches über ein Ritzel 9 auf eine Zahnstange 10 einwirkt. Die Zahnstange 10 wird je nach gewünschter Lenkrichtung nach links oder rechts verschoben. Die Bewegung wird über zwei Spurstangen 11 auf die gelenkten Fahrzeugräder 12 übertragen, von denen in Figur 1 nur das linke Vorderrad dargestellt ist. Die Drehgelenke 5, 7 umfassen jeweils zwei Gabeln 51, 52, 71, 72 und ein in den Gabeln gelagertes Zapfenkreuz.

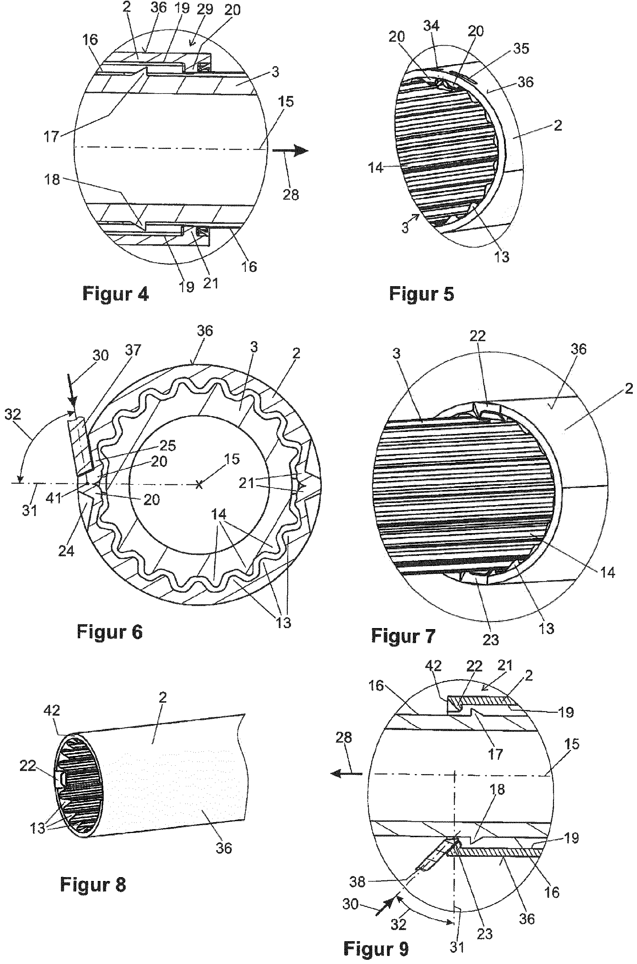

Um eine Längsverstellung des Lenkrads 4 in Drehachsrichtung 15 der Lenkwelle 1 zu gewährleisten, hat die Lenkwelle 1 einen teleskopierbaren Abschnitt 2, 3, der in den Figuren 1 und 3 dargestellt ist. Der teleskopierbare Abschnitt 2, 3 besteht aus einem Außenwellenteil 2 in welches ein Innenwellenteil 3 eingeschoben ist. Wie man am besten in den Figuren 5 bis 8 erkennt, hat das Außenwellenteil 2 auf seiner inneren Fläche eine Längsverzahnung 13, die mit einer Längsverzahnung 14 auf der Außenfläche des Innenwellenteils 3 in Eingriff kommt, wenn das Innenwellenteil 3 in das Außenwellenteil 2 eingeschoben wird. Dadurch ist das Innenwellenteil 3 im Außenwellenteil 2 in Richtung der Drehachse 15 leicht verschiebbar, während Innenwellenteil 2 und Außenwellenteil 3 drehmomentschlüssig miteinander verbunden sind, um die vom Fahrer mit dem Lenkrad 4 eingeleiteten Drehmomente zum Lenkgetriebe 8 zu übertragen.

Das Innenwellenteil 3 weist auf der Außenfläche eine partielle Beschichtung, auch Umspritzung genannt, aus einem Kunststoff auf, die mit der Längsverzahnung 13 des Außenwellenteils 2 zusammenwirkt und ein Drehspiel zwischen Außenwellenteil 2 und Innenwellenteil 3 minimiert. Alternativ kann statt der Beschichtung auch eine fest auf der Innenwelle 3 angebrachten Profilhülse angeordnet sein. Ebenfalls ist es denkbar und möglich, dass die partielle Beschichtung auf der Innenfläche das Außenwellenteils 2 ausgebildet ist oder die Profilhülse in der Aussenwelle 2 aufgenommen ist.

Wie man am besten in den Figuren 4, 9, 11, 13 und 15 erkennt, ist das Innenwellteil 3 mit zwei von seiner Außenseite 16 radial nach außen vorspringenden Innenanschlägen 17, 18 versehen, die in Umfangsrichtung gesehen im Abstand von 180° angeordnet sind. Entsprechend ist das Außenwellteil 2 mit zwei von seiner Innenseite 19 radial nach innen vorspringenden axialen Außenanschlägen 20 bis 27, 43 44 versehen. Die jeweiligen Innenanschläge 17, 18 wirken mit den zugehörigen Außenanschlägen 20 bis 27, 43 44 derart zusammen, dass der axiale Verschiebeweg des Innenwellteils 2 in Auszugsrichtung 28 begrenzt ist, weil der jeweilige Innenanschlag 17, 18 an den jeweiligen Außenanschlag 20 bis 27, 43 44 anschlägt und ein komplettes Herausziehen des Innenwellteils 2 aus dem Außenwellenteil 3 verhindert.

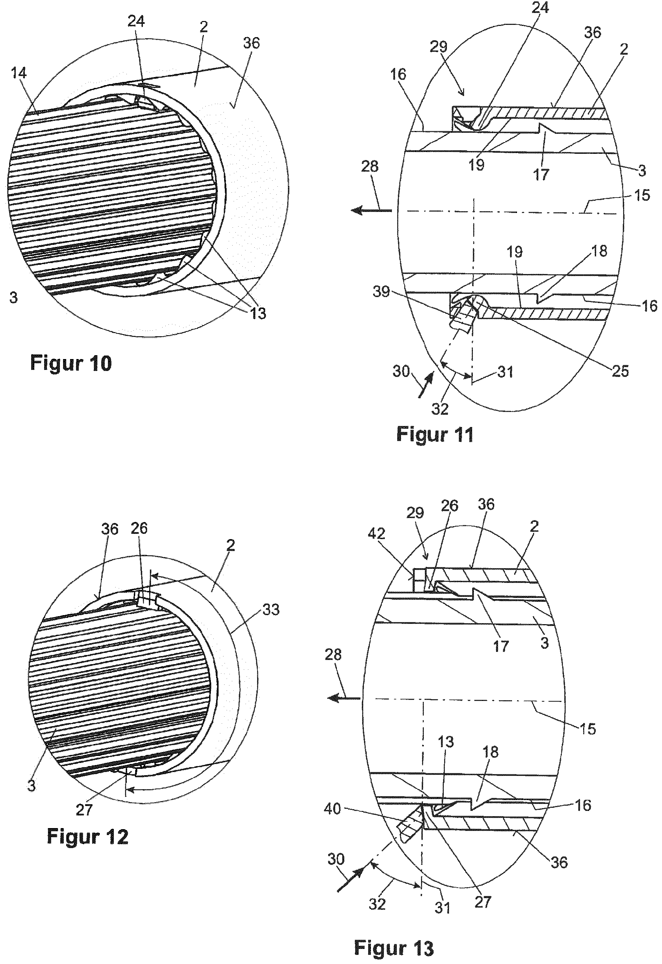

Die vorliegende Erfindung betrifft vorteilhafte Ausgestaltungen der jeweiligen Außenanschläge 20 bis 27, 43 44 sowie Verfahren zu deren Herstellung. Gemeinsam ist allen Ausführungsformen, dass die Außenanschläge 20 bis 27, 43 44 durch einen Umformprozess in einen Endabschnitt 29 des Außenwellenteils 2 eingebracht werden, wobei die jeweilige Achse der Einbringrichtung 30 jeweils mit der Radialrichtung 31 des Außenwellenteils 2 einen Winkel 32 von mehr als 20° bildet. Des Weiteren ist den Ausführungsbeispielen gemeinsam, dass jeweils zwei Außenanschläge 20 bis 27, 43 44 auf dem Außenwellenteil 2 in Umfangsrichtung 33 im Abstand von 180° angeordnet sind. Dies ist beispielhaft in Figur 12 veranschaulicht.

Zieht man das Innenwellenteil 3 in Auszugsrichtung 28 aus dem Außenwellenteil 2 heraus, so kommen die Innenanschläge 17, 18 des Innenwellenteils 3 in Anschlag mit den Außenanschlägen 20 bis 27, 43 44 des Außenwellenteils 2, wodurch die Auszugsbewegung begrenzt und gestoppt wird. Dadurch wird verhindert, dass das Innenwellenteil 3 versehentlich vollständig aus dem Außenwellenteil 2 herausgezogen wird.

In einem ersten Ausführungsbeispiel der Erfindung, das in den Figuren 4 bis 6 dargestellt ist, werden die Außenanschläge 20, 21 jeweils durch zwei Umformprozesse an zwei benachbarten Stellen 34, 35 in den Außenumfang 36 des Außenwellenteils 2 durch einen Prägevorgang mittels eines ersten Formwerkzeugs 37 eingebracht, wobei die Achsen der Einbringrichtungen 30 mit der Radialrichtung 31 einen Winkel 32 von etwa 80° bilden. Außerdem sind die gegenüberliegenden Einbringrichtungen 30 der beiden Formwerkzeuge 37 so ausgerichtet, dass sie in einer zur Drehachse 15 des Außenwellenteils 2 orthogonalen Ebene liegen und sich in einem radial zwischen der Drehachse 15 und dem Außenumfang 36 des Außenwellenteils 2 angeordneten Punkt 41 schneiden. Dadurch haben die beiden Einbringrichtungen 30 untereinander einen Winkel von etwa 160°, so dass sich die in Einbringrichtung 30 wirkenden Kräfte der beiden Formwerkzeuge 37 nur zu einem ganz geringen Teil in Radialrichtung 31 auswirken.

Bei dem zweiten Ausführungsbeispiel, welches in den Figuren 7-9 dargestellt ist, werden die beiden Außenanschläge 22, 23 in die Stirnfläche 42 des Außenwellenteils 2 mittels eines zweiten Formwerkzeugs 38 eingeformt, wobei die Achse der Einbringrichtung 30 in einer die Drehachse 15 des Außenwellenteils 2 einschließenden Ebene liegt. Diese Ebene entspricht in Figur 9 der Papierebene.

Bei dem in den Figuren 10 und 11 dargestellten dritten Ausführungsbeispiel sind die beiden Außenanschläge 24, 25 durch Einformen in den Außenumfang 36 des Außenwellenteils 2 eingebracht worden, wobei ein drittes Formwerkzeug 39 in Einbringrichtung 30 bewegt wird. Dabei liegt die Einbringvorrichtung 30 in einer die Drehachse 15 des Außenwellenteils 2 einschließenden Ebene, welche in Figur 11 der Papierebene entspricht.

Bei einem vierten Ausführungsbeispiel der Erfindung wirkt zur Erzeugung der Außenanschläge 26, 27 ein viertes Formwerkzeug 40 auf einen im Bereich des Außenwellenteils 2 ein, der sowohl den Außenumfang 36 als auch die Stirnfläche 42 des Außenwellenteils 2 umfasst. Dabei liegt die Achse der Einbringrichtung 30 wieder in einer die Drehachse 15 des Außenwellenteils 2 einschließenden Ebene, die in Figur 13 der Papierebene entspricht.

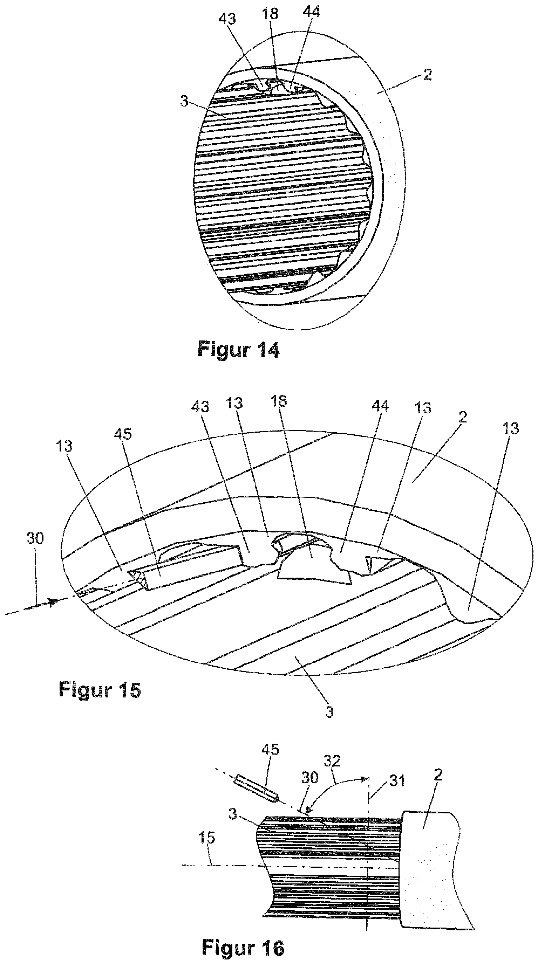

Bei einem fünften Ausführungsbeispiel der Erfindung, wie dies in den Figuren 14 bis 16 dargestellt ist, wirkt zur Erzeugung der Außenanschläge 43, 44 ein fünftes Formwerkzeug 45 auf einen Endbereich der Längsverzahnung 13 ein, die sich auf der Innenseite 19 des Außenwellenteils 2 befindet. Die Achse der Einbringrichtung 30 liegt dabei in einer Ebene, die zur Drehachse 15 des Innenwellenteils 3 parallel verschoben und im Wesentlichen tangential zur Außenseite 16 des Innenwellenteils 3 angeordnet ist. Diese Ebene verläuft also durch den Bereich zwischen Innenwellenteil 3 und Außenwellenteil 2, wo die jeweiligen Längsverzahnungen 13, 14 ineinandergreifen. Vorzugsweise wirken zwei Umformwerkzeuge 45 gleichzeitig auf zwei Endbereiche von zwei benachbarten Längsverzahnungen ein, wobei die jeweiligen Einbringrichtungen 30 in der genannten Ebene zueinander einen Winkel von mehr als 90° bilden.

Bei allen Ausführungsbeispielen entstehen verschieden geformte Außenanschläge 20 bis 27, 43, 44, denen jedoch gemeinsam ist, dass die Art ihrer Herstellung nicht zu einer großräumigen Verformung des gesamten Querschnitts des Außenwellenteils 2 führen kann, etwa eine Umformung des kreisrunden in einen ovalen Querschnitt. Dadurch wird verhindert, dass das Innenwellenteil 3 in dem verformten Außenwellenteil 2 festklemmen könnte und erhöhte Kräfte für die Verschiebung in Richtung der Drehachse 15 erforderlich wären. Die erfindungsgemäßen Verfahren ermöglichen eine unaufwändige Herstellung der Außenanschläge 20 bis 27, 43, 44, ohne die Nachteile des Standes der Technik aufzuweisen.

### BEZUGSZEICHENLISTE

- 1: Lenkwelle
- 2: Außenwellenteil
- 3: Innenwellenteil
- 4: Lenkrad
- 5: Drehgelenk
- 7: Drehgelenk
- 8: Lenkgetriebe
- 9: Ritzel
- 10: Zahnstange
- 11: Spurstangen
- 12: Fahrzeuggrad
- 13: Längsverzahnung
- 14: Längsverzahnung
- 15: Drehachse
- 16: Außenseite
- 17: Innenanschlag
- 18: Innenanschlag
- 19: Innenseite
- 20: Außenanschlag
- 21: Außenanschlag
- 22: Außenanschlag
- 23: Außenanschlag
- 24: Außenanschlag
- 25: Außenanschlag
- 26: Außenanschlag
- 27: Außenanschlag
- 28: Auszugsrichtung
- 29: Endabschnitt
- 30: Einbringrichtung
- 31: Radialrichtung
- 32: Winkel
- 33: Umfangsrichtung
- 34: Stelle
- 35: Stelle
- 36: Außenumfang
- 37: Formwerkzeug
- 38: Formwerkzeug
- 39: Formwerkzeug
- 40: Formwerkzeug
- 41: Punkt
- 42: Stirnfläche
- 43: Außenanschlag
- 44: Außenanschlag
- 45: Formwerkzeug

## Patentansprüche

1. Lenkwelle für ein Kraftfahrzeug, mit einem Außenwellenteil (2), in dem ein Innenwellenteil (3) drehmomentschlüssig und axial verschiebbar aufgenommen ist, mit mindestens einem von der Außenseite (16) des Innenwellenteils (3) radial nach außen vorspringenden axialen Innenanschlag (17, 18), der beim Herausziehen des Innenwellenteils (3) aus dem Außenwellenteil (2) an mindestens einen von der Innenseite (19) des Außenwellenteils (2) radial nach innen vorspringenden axialen Außenanschlag (20 bis 27, 43, 44) anschlägt, so dass der axiale Verschiebeweg des Innenwellenteils (3) im Außenwellenteil (2) in Auszugsrichtung (28) begrenzt ist, wobei der mindestens eine Außenanschlag (20 bis 27, 43, 44) durch mindestens einen Umformprozess in einen Endabschnitt (29) des Außenwellenteils (2) eingebracht ist, wobei die Achse der Einbringrichtung (30) jeweils mit der Radialrichtung (31) des Außenwellenteils (3) einen Winkel (32) von mehr als 20° bildet, **dadurch gekennzeichnet, dass** die Außenanschläge (20, 21) jeweils durch zwei Umformprozesse an zwei benachbarten Stellen (34, 35) in den Außenumfang (36) des Außenwellenteils (2) eingebracht sind, wobei die Achsen der Einbringrichtungen (30) in einer zur Drehachse (15) des Außenwellenteils (2) orthogonalen Ebene liegen und sich in einem radial zwischen der Drehachse (15) und dem Außenumfang (36) des Außenwellenteils (2) angeordneten Punkt (41) schneiden.

2. Lenkwelle für ein Kraftfahrzeug, mit einem Außenwellenteil (2), in dem ein Innenwellenteil (3) drehmomentschlüssig und axial verschiebbar aufgenommen ist, mit mindestens einem von der Außenseite (16) des Innenwellenteils (3) radial nach außen vorspringenden axialen Innenanschlag (17, 18), der beim Herausziehen des Innenwellenteils (3) aus dem Außenwellenteil (2) an mindestens einen von der Innenseite (19) des Außenwellenteils (2) radial nach innen vorspringenden axialen Außenanschlag (20 bis 27, 43, 44) anschlägt, so dass der axiale Verschiebeweg des Innenwellenteils (3) im Außenwellenteil (2) in Auszugsrichtung (28) begrenzt ist, wobei der mindestens eine Außenanschlag (20 bis 27, 43, 44) durch mindestens einen Umformprozess in einen Endabschnitt (29) des Außenwellenteils (2) eingebracht ist, wobei die Achse der Einbringrichtung (30) jeweils mit der Radialrichtung (31) des Außenwellenteils (3) einen Winkel (32) von mehr als 20° bildet, **dadurch gekennzeichnet, dass** der oder die Außenanschläge (22, 23) jeweils durch einen Umformprozess in eine Stirnfläche (42) des Außenwellenteils (2) eingebracht sind, wobei die Achse der Einbringrichtung (30) in einer die Drehachse (15) des Außenwellenteils (2) einschließenden Ebene liegt.

3. Lenkwelle für ein Kraftfahrzeug, mit einem Außenwellenteil (2), in dem ein Innenwellenteil (3) drehmomentschlüssig und axial verschiebbar aufgenommen ist, mit mindestens einem von der Außenseite (16) des Innenwellenteils (3) radial nach außen vorspringenden axialen Innenanschlag (17, 18), der beim Herausziehen des Innenwellenteils (3) aus dem Außenwellenteil (2) an mindestens einen von der Innenseite (19) des Außenwellenteils (2) radial nach innen vorspringenden axialen Außenanschlag (20 bis 27, 43, 44) anschlägt, so dass der axiale Verschiebeweg des Innenwellenteils (3) im Außenwellenteil (2) in Auszugsrichtung (28) begrenzt ist, wobei der mindestens eine Außenanschlag (20 bis 27, 43, 44) durch mindestens einen Umformprozess in einen Endabschnitt (29) des Außenwellenteils (2) eingebracht ist, wobei die Achse der Einbringrichtung (30) jeweils mit der Radialrichtung (31) des Außenwellenteils (3) einen Winkel (32) von mehr als 20° bildet, **dadurch gekennzeichnet, dass** der oder die Außenanschläge (24, 25) jeweils durch einen Umformprozess in den Außenumfang (36) des Außenwellenteils (2) eingebracht sind, wobei die Achse der Einbringrichtung (30) in einer die Drehachse (15) des Außenwellenteils (2) einschließenden Ebene liegt.

4. Lenkwelle für ein Kraftfahrzeug, mit einem Außenwellenteil (2), in dem ein Innenwellenteil (3) drehmomentschlüssig und axial verschiebbar aufgenommen ist, mit mindestens einem von der Außenseite (16) des Innenwellenteils (3) radial nach außen vorspringenden axialen Innenanschlag (17, 18), der beim Herausziehen des Innenwellenteils (3) aus dem Außenwellenteil (2) an mindestens einen von der Innenseite (19) des Außenwellenteils (2) radial nach innen vorspringenden axialen Außenanschlag (20 bis 27, 43, 44) anschlägt, so dass der axiale Verschiebeweg des Innenwellenteils (3) im Außenwellenteil (2) in Auszugsrichtung (28) begrenzt ist, wobei der mindestens eine Außenanschlag (20 bis 27, 43, 44) durch mindestens einen Umformprozess in einen Endabschnitt (29) des Außenwellenteils (2) eingebracht ist, wobei die Achse der Einbringrichtung (30) jeweils mit der Radialrichtung (31) des Außenwellenteils (3) einen Winkel (32) von mehr als 20° bildet, **dadurch gekennzeichnet, dass** der oder die Außenanschläge (26, 27) jeweils durch einen Umformprozess in einen die Stirnfläche (42) und den Außenumfang (36) einschließenden Bereich des Außenwellenteils (2) eingebracht sind, wobei die Achse der Einbringrichtung (30) in einer die Drehachse (15) des Außenwellenteils (2) einschließenden Ebene liegt.

5. Lenkwelle für ein Kraftfahrzeug, mit einem Außenwellenteil (2), in dem ein Innenwellenteil (3) drehmomentschlüssig und axial verschiebbar aufgenommen ist, mit mindestens einem von der Außenseite (16) des Innenwellenteils (3) radial nach außen vorspringenden axialen Innenanschlag (17, 18), der beim Herausziehen des Innenwellenteils (3) aus dem Außenwellenteil (2) an mindestens einen von der Innenseite (19) des Außenwellenteils (2) radial nach innen vorspringenden axialen Außenanschlag (20 bis 27, 43, 44) anschlägt, so dass der axiale Verschiebeweg des Innenwellenteils (3) im Außenwellenteil (2) in Auszugsrichtung (28) begrenzt ist, wobei der mindestens eine Außenanschlag (20 bis 27, 43, 44) durch mindestens einen Umformprozess in einen Endabschnitt (29) des Außenwellenteils (2) eingebracht ist, wobei die Achse der Einbringrichtung (30) jeweils mit der Radialrichtung (31) des Außenwellenteils (3) einen Winkel (32) von mehr als 20° bildet, **dadurch gekennzeichnet, dass** die Außenanschläge (43, 44) jeweils durch einen Umformprozess in den jeweiligen Endbereich einer Längsverzahnung (13) auf der Innenseite (19) des Außenwellenteils (2) eingebracht sind, wobei die Achse der Einbringrichtung (30) in einer im Wesentlichen tangential zur Außenseite (16) des Innenwellenteils (3) angeordneten Ebene liegt.

6. Lenkwelle nach einem der Ansprüche 1 bis 5, **dadurch gekennzeichnet, dass** zwei Innenanschläge (17, 18) auf dem Innenwellenteil (3) und zwei den Innenanschlägen (17, 18) zugeordnete Außenanschläge (20 bis 27, 43, 44) auf dem Außenwellenteil (2) in Umfangsrichtung (33) im Abstand von 180° angeordnet sind.

7. Verfahren zur Herstellung einer Auszugsicherung einer Lenkwelle (1) nach Anspruch 1 oder Anspruch 6, wenn abhängig von Anspruch 1, bei dem ein mit mindestens einem von seiner Außenseite (16) nach außen vorspringenden axialen Innenanschlag (17, 18) versehenes Innenwellenteil (3) in ein Außenwellenteil (2) eingeschoben und anschließend in das Außenwellenteil (2) mindestens ein von der Innenseite (19) des Außenwellenteils (2) radial nach innen vorspringender axialer Außenanschlag (20 bis 27, 43, 44) eingeformt wird, wobei der Außenanschlag (20 bis 27, 43, 44) durch einen Prägevorgang eines Formwerkzeugs (37 bis 40, 45) eingebracht wird, wobei die Achse der Einbringrichtung (30), in die das Formwerkzeug (37 bis 40, 45) bewegt wird, mit der Radialrichtung (31) des Außenwellenteils (2) einen Winkel (32) von mehr als 20° bildet, **dadurch gekennzeichnet, dass** zwei erste Formwerkzeuge (37) auf zwei benachbarte Stellen (34, 35) des Außenumfangs (36) des Außenwellenteils (2) einwirken, wobei die Achsen der beiden Einbringrichtungen (30) in einer zur Drehachse (15) des Außenwellenteils (2) orthogonalen Ebene liegen und sich in einem radial zwischen der Drehachse (15) und dem Außenumfang (36) des Außenwellenteils (2) angeordneten Punkt (41) schneiden.

8. Verfahren zur Herstellung einer Auszugsicherung einer Lenkwelle (1) nach Anspruch 2 oder Anspruch 6, wenn abhängig von Anspruch 2, bei dem ein mit mindestens einem von seiner Außenseite (16) nach außen vorspringenden axialen Innenanschlag (17, 18) versehenes Innenwellenteil (3) in ein Außenwellenteil (2) eingeschoben und anschließend in das Außenwellenteil (2) mindestens ein von der Innenseite (19) des Außenwellenteils (2) radial nach innen vorspringender axialer Außenanschlag (20 bis 27, 43, 44) eingeformt wird, wobei der Außenanschlag (20 bis 27, 43, 44) durch einen Prägevorgang eines Formwerkzeugs (37 bis 40, 45) eingebracht wird, wobei die Achse der Einbringrichtung (30), in die das Formwerkzeug (37 bis 40, 45) bewegt wird, mit der Radialrichtung (31) des Außenwellenteils (2) einen Winkel (32) von mehr als 20° bildet, **dadurch gekennzeichnet, dass** ein zweites Formwerkzeug (38) auf eine Stirnfläche (42) des Außenwellenteils (2) einwirkt, wobei die Achse der Einbringrichtung (30) in einer die Drehachse (15) des Außenwellenteils (2) einschließenden Ebene liegt.

9. Verfahren zur Herstellung einer Auszugsicherung einer Lenkwelle (1) nach Anspruch 3 oder Anspruch 6, wenn abhängig von Anspruch 3, bei dem ein mit mindestens einem von seiner Außenseite (16) nach außen vorspringenden axialen Innenanschlag (17, 18) versehenes Innenwellenteil (3) in ein Außenwellenteil (2) eingeschoben und anschließend in das Außenwellenteil (2) mindestens ein von der Innenseite (19) des Außenwellenteils (2) radial nach innen vorspringende axialer Außenanschlag (20 bis 27, 43, 44) eingeformt wird, wobei der Außenanschlag (20 bis 27, 43, 44) durch einen Prägevorgang eines Formwerkzeugs (37 bis 40, 45) eingebracht wird, wobei die Achse der Einbringrichtung (30), in die das Formwerkzeug (37 bis 40, 45) bewegt wird, mit der Radialrichtung (31) des Außenwellenteils (2) einen Winkel (32) von mehr als 20° bildet, **dadurch gekennzeichnet, dass** der ein drittes Formwerkzeug (39) auf den Außenumfang (36) des Außenwellenteils (2) einwirkt, wobei die Achse der Einbringrichtung (30) in einer die Drehachse (15) des Außenwellenteils (2) einschließenden Ebene liegt.

10. Verfahren zur Herstellung einer Auszugsicherung einer Lenkwelle (1) nach Anspruch 4 oder Anspruch 6, wenn abhängig von Anspruch 4, bei dem ein mit mindestens einem von seiner Außenseite (16) nach außen vorspringenden axialen Innenanschlag (17, 18) versehenes Innenwellenteil (3) in ein Außenwellenteil (2) eingeschoben und anschließend in das Außenwellenteil (2) mindestens ein von der Innenseite (19) des Außenwellenteils (2) radial nach innen vorspringender axialer Außenanschlag (20 bis 27, 43, 44) eingeformt wird, wobei der Außenanschlag (20 bis 27, 43, 44) durch einen Prägevorgang eines Formwerkzeugs (37 bis 40, 45) eingebracht wird, wobei die Achse der Einbringrichtung (30), in die das Formwerkzeug (37 bis 40, 45) bewegt wird, mit der Radialrichtung (31) des Außenwellenteils (2) einen Winkel (32) von mehr als 20° bildet, **dadurch gekennzeichnet, dass** ein viertes Formwerkzeug (40) auf einen den Außenumfang (36) und die Stirnfläche (42) des Außenwellenteils (2) einschließenden Bereich des Außenwellenteils (2) einwirkt, wobei die Achse der Einbringrichtung (30) in einer die Drehachse (15) des Außenwellenteils (2) einschließenden Ebene liegt.

11. Verfahren zur Herstellung einer Auszugsicherung einer Lenkwelle (1) nach Anspruch 5 oder Anspruch 6, wenn abhängig von Anspruch 5, bei dem ein mit mindestens einem von seiner Außenseite (16) nach außen vorspringenden axialen Innenanschlag (17, 18) versehenes Innenwellenteil (3) in ein Außenwellenteil (2) eingeschoben und anschließend in das Außenwellenteil (2) mindestens ein von der Innenseite (19) des Außenwellenteils (2) radial nach innen vorspringender axialer Außenanschlag (20 bis 27, 43, 44) eingeformt wird, wobei der Außenanschlag (20 bis 27, 43, 44) durch einen Prägevorgang eines Formwerkzeugs (37 bis 40, 45) eingebracht wird, wobei die Achse der Einbringrichtung (30), in die das Formwerkzeug (37 bis 40, 45) bewegt wird, mit der Radialrichtung (31) des Außenwellenteils (2) einen Winkel (32) von mehr als 20° bildet, **dadurch gekennzeichnet, dass** ein fünftes Formwerkzeug (45) auf einen Endbereich einer Längsverzahnung (13) auf der Innenseite (19) des Außenwellenteils (2) einwirkt, wobei die Achse der Einbringrichtung (30) in einer im Wesentlichen tangential zur Außenseite (16) des Innenwellenteils (3) angeordneten Ebene liegt.

12. Verfahren nach Anspruch 11, **dadurch gekennzeichnet, dass** zwei Umformprozesse an zwei benachbarten Längsverzahnungen (13) durch zwei Umformwerkzeuge (45) durchgeführt werden, wobei die jeweiligen Einbringrichtungen (30) zueinander einen Winkel von mehr als 90° bilden.

13. Verfahren nach einem der Ansprüche 7 bis 11, **dadurch gekennzeichnet, dass** in das Außenwellenteil (2) zwei in Umfangsrichtung (33) im Abstand von 180° angeordnete Außenanschläge (20 bis 27, 43, 44) eingeformt werden.

## Claims

1. Steering shaft for a motor vehicle, with an outer shaft part (2), in which an inner shaft part (3) is received in a torque-transmitting manner and such that it can be displaced axially, with at least one axial inner stop (17, 18) which projects radially to the outside from the outer side (16) of the inner shaft part (3) and, when the inner shaft part (3) is pulled out of the outer shaft part (2), bears against at least one axial outer stop (20 to 27, 43, 44) which projects radially to the inside from the inner side (19) of the outer shaft part (2), with the result that the axial displacement travel of the inner shaft part (3) in the outer shaft part (2) is limited in the pull-out direction (28), the at least one outer stop (20 to 27, 43, 44) being made in an end section (29) of the outer shaft part (2) by way of at least one reshaping process, the axis of the making direction (30) forming an angle (32) of more than 20° in each case with the radial direction (31) of the outer shaft part (3), **characterized in that** the outer stops (20, 21) are made in the outer circumference (36) of the outer shaft part (2) in each case by way of two reshaping processes at two adjacent points (34, 35), the axes of the making directions (30) lying in a plane which is orthogonal with respect to the rotational axis (15) of the outer shaft part (2), and intersecting at a point (41) which is arranged radially between the rotational axis (15) and the outer circumference (36) of the outer shaft part (2).

2. Steering shaft for a motor vehicle, with an outer shaft part (2), in which an inner shaft part (3) is received in a torque-transmitting manner and such that it can be displaced axially, with at least one axial inner stop (17, 18) which projects radially to the outside from the outer side (16) of the inner shaft part (3) and, when the inner shaft part (3) is pulled out of the outer shaft part (2), bears against at least one axial outer stop (20 to 27, 43, 44) which projects radially to the inside from the inner side (19) of the outer shaft part (2), with the result that the axial displacement travel of the inner shaft part (3) in the outer shaft part (2) is limited in the pull-out direction (28), the at least one outer stop (20 to 27, 43, 44) being made in an end section (29) of the outer shaft part (2) by way of at least one reshaping process, the axis of the making direction (30) forming an angle (32) of more than 20° in each case with the radial direction (31) of the outer shaft part (3), **characterized in that** the outer stop or stops (22, 23) is/are made in an end face (42) of the outer shaft part (2) in each case by way of a reshaping process, the axis of the making direction (30) lying in a plane which includes the rotational axis (15) of the outer shaft part (2).

3. Steering shaft for a motor vehicle, with an outer shaft part (2), in which an inner shaft part (3) is received in a torque-transmitting manner and such that it can be displaced axially, with at least one axial inner stop (17, 18) which projects radially to the outside from the outer side (16) of the inner shaft part (3) and, when the inner shaft part (3) is pulled out of the outer shaft part (2), bears against at least one axial outer stop (20 to 27, 43, 44) which projects radially to the inside from the inner side (19) of the outer shaft part (2), with the result that the axial displacement travel of the inner shaft part (3) in the outer shaft part (2) is limited in the pull-out direction (28), the at least one outer stop (20 to 27, 43, 44) being made in an end section (29) of the outer shaft part (2) by way of at least one reshaping process, the axis of the making direction (30) forming an angle (32) of more than 20° in each case with the radial direction (31) of the outer shaft part (3), **characterized in that** the outer stop or stops (24, 25) is/are made in the outer circumference (36) of the outer shaft part (2) in each case by way of a reshaping process, the axis of the making direction (30) lying in a plane which includes the rotational axis (15) of the outer shaft part (2).

4. Steering shaft for a motor vehicle, with an outer shaft part (2), in which an inner shaft part (3) is received in a torque-transmitting manner and such that it can be displaced axially, with at least one axial inner stop (17, 18) which projects radially to the outside from the outer side (16) of the inner shaft part (3) and, when the inner shaft part (3) is pulled out of the outer shaft part (2), bears against at least one axial outer stop (20 to 27, 43, 44) which projects radially to the inside from the inner side (19) of the outer shaft part (2), with the result that the axial displacement travel of the inner shaft part (3) in the outer shaft part (2) is limited in the pull-out direction (28), the at least one outer stop (20 to 27, 43, 44) being made in an end section (29) of the outer shaft part (2) by way of at least one reshaping process, the axis of the making direction (30) forming an angle (32) of more than 20° in each case with the radial direction (31) of the outer shaft part (3), **characterized in that** the outer stop or stops (26, 27) is/are made in each case by way of a reshaping process in a region of the outer shaft part (2), which region includes the end face (42) and the outer circumference (36), the axis of the making direction (30) lying in a plane which includes the rotational axis (15) of the outer shaft part (2).

5. Steering shaft for a motor vehicle, with an outer shaft part (2), in which an inner shaft part (3) is received in a torque-transmitting manner and such that it can be displaced axially, with at least one axial inner stop (17, 18) which projects radially to the outside from the outer side (16) of the inner shaft part (3) and, when the inner shaft part (3) is pulled out of the outer shaft part (2), bears against at least one axial outer stop (20 to 27, 43, 44) which projects radially to the inside from the inner side (19) of the outer shaft part (2), with the result that the axial displacement travel of the inner shaft part (3) in the outer shaft part (2) is limited in the pull-out direction (28), the at least one outer stop (20 to 27, 43, 44) being made in an end section (29) of the outer shaft part (2) by way of at least one reshaping process, the axis of the making direction (30) forming an angle (32) of more than 20° in each case with the radial direction (31) of the outer shaft part (3), **characterized in that** the outer stops (43, 44) are made in the respective end region of a longitudinal spline system (13) on the inner side (19) of the outer shaft part (2) in each case by way of a reshaping process, the axis of the making direction (30) lying in a plane which is arranged substantially tangentially with respect to the outer side (16) of the inner shaft part (3).

6. Steering shaft according to one of Claims 1 to 5, **characterized in that** two inner stops (17, 18) are arranged on the inner shaft part (3), and two outer stops (20 to 27, 43, 44) which are assigned to the inner stops (17, 18) are arranged on the outer shaft part (2), at a spacing of 180° in the circumferential direction (33).

7. Method for producing a pull-out securing means of a steering shaft (1) according to Claim 1 or Claim 6 if dependent on Claim 1, in the case of which method an inner wall part (3) which is provided with at least one axial inner stop (17, 18) which projects to the outside from its outer side (16) is pushed into an outer shaft part (2), and subsequently at least one axial outer stop (20 to27, 43, 44) which projects radially to the inside from the inner side (19) of the outer shaft part (2) is formed in the outer shaft part (2), the outer stop (20 to 27, 43, 44) being made by way of a stamping operation of a forming tool (37 to 40, 45), the axis of the making direction (30), in which the forming tool (37 to 40, 45) is moved, forming an angle (32) of more than 20° with the radial direction (31) of the outer shaft part (2), **characterized in that** two first forming tools (37) act on two adjacent points (34, 35) of the outer circumference (36) of the outer shaft part (2), the axes of the two making directions (30) lying in a plane which is orthogonal with respect to the rotational axis (15) of the outer shaft part (2), and intersecting at a point (41) which is arranged radially between the rotational axis (15) and the outer circumference (36) of the outer shaft part (2).

8. Method for producing a pull-out securing means of a steering shaft (1) according to Claim 2 or Claim 6 if dependent on Claim 2, in the case of which method an inner shaft part (3) which is provided with at least one axial inner stop (17, 18) which projects to the outside from its outer side (16) is pushed into an outer shaft part (2), and subsequently at least one axial outer stop (20 to 27, 43, 44) which projects radially to the inside from the inner side (19) of the outer shaft part (2) is formed in the outer shaft part (2), the outer stop (20 to 27, 43, 44) being made by way of a stamping operation of a forming tool (37 to 40, 45), the axis of the making direction (30), in which the forming tool (37 to 40, 45) is moved, forming an angle (32) of more than 20° with the radial direction (31) of the outer shaft part (2), **characterized in that** a second forming tool (38) acts on an end face (42) of the outer shaft part (2), the axis of the making direction (30) lying in a plane which includes the rotational axis (15) of the outer shaft part (2) .

9. Method for producing a pull-out securing means of a steering shaft (1) according to Claim 3 or Claim 6 if dependent on Claim 3, in the case of which method an inner shaft part (3) which is provided with at least one axial inner stop (17, 18) which projects to the outside from its outer side (16) is pushed into an outer shaft part (2), and subsequently at least one axial outer stop (20 to 27, 43, 44) which projects radially to the inside from the inner side (19) of the outer shaft part (2) is formed in the outer shaft part (2), the outer stop (20 to 27, 43, 44) being made by way of a stamping operation of a forming tool (37 to 40, 45), the axis of the making direction (30), in which the forming tool (37 to 40, 45) is moved, forming an angle (32) of more than 20° with the radial direction (31) of the outer shaft part (2), **characterized in that** a third forming tool (39) acts on the outer circumference (36) of the outer shaft part (2), the axis of the making direction (30) lying in a plane which includes the rotational axis (15) of the outer shaft part (2).

10. Method for producing a pull-out securing means of a steering shaft (1) according to Claim 4 or Claim 6 if dependent on Claim 4, in the case of which method an inner shaft part (3) which is provided with at least one axial inner stop (17, 18) which projects to the outside from its outer side (16) is pushed into an outer shaft part (2), and subsequently at least one axial outer stop (20 to 27, 43, 44) which projects radially to the inside from the inner side (19) of the outer shaft part (2) is formed in the outer shaft part (2), the outer stop (20 to 27, 43, 44) being made by way of a stamping operation of a forming tool (37 to 40, 45), the axis of the making direction (30), in which the forming tool (37 to 40, 45) is moved, forming an angle (32) of more than 20° with the radial direction (31) of the outer shaft part (2), **characterized in that** a fourth forming tool (40) acts on a region of the outer shaft part (2), which region includes the outer circumference (36) and the end face (42) of the outer shaft part (2), the axis of the making direction (30) lying in a plane which includes the rotational axis (15) of the outer shaft part (2).

11. Method for producing a pull-out securing means of a steering shaft (1) according to Claim 5 or Claim 6 if dependent on Claim 5, in the case of which method an inner shaft part (3) which is provided with at least one axial inner stop (17, 18) which projects to the outside from its outer side (16) is pushed into an outer shaft part (2), and subsequently at least one axial outer stop (20 to 27, 43, 44) which projects radially to the inside from the inner side (19) of the outer shaft part (2) is formed in the outer shaft part (2), the outer stop (20 to 27, 43, 44) being made by way of a stamping operation of a forming tool (37 to 40, 45), the axis of the making direction (30), in which the forming tool (37 to 40, 45) is moved, forming an angle (32) of more than 20° with the radial direction (31) of the outer shaft part (2), **characterized in that** a fifth forming tool (45) acts on an end region of a longitudinal spline system (13) on the inner side (19) of the outer shaft part (2), the axis of the making direction (30) lying in a plane which is arranged substantially tangentially with respect to the outer side (16) of the inner shaft part (3).

12. Method according to Claim 11, **characterized in that** two reshaping processes are carried out on two adjacent longitudinal spline systems (13) by way of two reshaping tools (45), the respective making directions (30) forming an angle of more than 90° with respect to one another.

13. Method according to one of Claims 7 to 11, **characterized in that** two outer stops (20 to 27, 43, 44) which are arranged at a spacing of 180° in the circumferential direction (33) are formed in the outer shaft part (2).

## Revendications

1. Arbre de direction pour un véhicule automobile, comprenant une partie d'arbre extérieure (2) dans laquelle est reçue de manière déplaçable axialement et en liaison de transmission de couple une partie d'arbre intérieure (3), avec au moins une butée intérieure axiale (17, 18) faisant saillie radialement vers l'extérieur depuis le côté extérieur (16) de la partie d'arbre intérieure (3), laquelle, lors du retrait de la partie d'arbre intérieure (3) hors de la partie d'arbre extérieure (2), bute contre au moins une butée extérieure axiale (20 à 27, 43, 44) faisant saillie radialement vers l'intérieur depuis le côté intérieur (19) de la partie d'arbre extérieure (2), de sorte que la course de déplacement axiale de la partie d'arbre intérieure (3) dans la partie d'arbre extérieure (2) soit limitée dans la direction d'extraction (28), l'au moins une butée extérieure (20 à 27, 43, 44) étant introduite dans une portion d'extrémité (29) de la partie d'arbre extérieure (2) par au moins un processus de déformation, l'axe de la direction d'introduction (30) formant à chaque fois avec la direction radiale (31) de la partie d'arbre extérieure (3) un angle (32) supérieur à 20°, **caractérisé en ce que** les butées extérieures (20, 21) sont à chaque fois introduites dans la périphérie extérieure (36) de la partie d'arbre extérieure (2) au niveau de deux zones adjacentes (34, 35) par deux processus de déformation, les axes des directions d'introduction (30) étant situés dans un plan perpendiculaire à l'axe de rotation (15) de la partie d'arbre extérieure (2) et s'intersectant en un point (41) disposé radialement entre l'axe de rotation (15) et la périphérie extérieure (36) de la partie d'arbre extérieure (2).

2. Arbre de direction pour un véhicule automobile, comprenant une partie d'arbre extérieure (2) dans laquelle est reçue de manière déplaçable axialement et en liaison de transmission de couple une partie d'arbre intérieure (3), avec au moins une butée intérieure axiale (17, 18) faisant saillie radialement vers l'extérieur depuis le côté extérieur (16) de la partie d'arbre intérieure (3), laquelle, lors du retrait de la partie d'arbre intérieure (3) hors de la partie d'arbre extérieure (2), bute contre au moins une butée extérieure axiale (20 à 27, 43, 44) faisant saillie radialement vers l'intérieur depuis le côté intérieur (19) de la partie d'arbre extérieure (2), de sorte que la course de déplacement axiale de la partie d'arbre intérieure (3) dans la partie d'arbre extérieure (2) soit limitée dans la direction d'extraction (28), l'au moins une butée extérieure (20 à 27, 43, 44) étant introduite dans une portion d'extrémité (29) de la partie d'arbre extérieure (2) par au moins un processus de déformation, l'axe de la direction d'introduction (30) formant à chaque fois avec la direction radiale (31) de la partie d'arbre extérieure (3) un angle (32) supérieur à 20°, **caractérisé en ce que** la ou les butées extérieures (22, 23) sont à chaque fois introduites dans une surface frontale (42) de la partie d'arbre extérieure (2) par un processus de déformation, l'axe de la direction d'introduction (30) étant situé dans un plan incluant l'axe de rotation (15) de la partie d'arbre extérieure (2).

3. Arbre de direction pour un véhicule automobile, comprenant une partie d'arbre extérieure (2) dans laquelle est reçue de manière déplaçable axialement et en liaison de transmission de couple une partie d'arbre intérieure (3), avec au moins une butée intérieure axiale (17, 18) faisant saillie radialement vers l'extérieur depuis le côté extérieur (16) de la partie d'arbre intérieure (3), laquelle, lors du retrait de la partie d'arbre intérieure (3) hors de la partie d'arbre extérieure (2), bute contre au moins une butée extérieure axiale (20 à 27, 43, 44) faisant saillie radialement vers l'intérieur depuis le côté intérieur (19) de la partie d'arbre extérieure (2), de sorte que la course de déplacement axiale de la partie d'arbre intérieure (3) dans la partie d'arbre extérieure (2) soit limitée dans la direction d'extraction (28), l'au moins une butée extérieure (20 à 27, 43, 44) étant introduite dans une portion d'extrémité (29) de la partie d'arbre extérieure (2) par au moins un processus de déformation, l'axe de la direction d'introduction (30) formant à chaque fois avec la direction radiale (31) de la partie d'arbre extérieure (3) un angle (32) supérieur à 20°, **caractérisé en ce que** la ou les butées extérieures (24, 25) sont à chaque fois introduites dans la périphérie extérieure (36) de la partie d'arbre extérieure (2) par un processus de déformation, l'axe de la direction d'introduction (30) étant situé dans un plan incluant l'axe de rotation (15) de la partie d'arbre extérieure (2).

4. Arbre de direction pour un véhicule automobile, comprenant une partie d'arbre extérieure (2) dans laquelle est reçue de manière déplaçable axialement et en liaison de transmission de couple une partie d'arbre intérieure (3), avec au moins une butée intérieure axiale (17, 18) faisant saillie radialement vers l'extérieur depuis le côté extérieur (16) de la partie d'arbre intérieure (3), laquelle, lors du retrait de la partie d'arbre intérieure (3) hors de la partie d'arbre extérieure (2), bute contre au moins une butée extérieure axiale (20 à 27, 43, 44) faisant saillie radialement vers l'intérieur depuis le côté intérieur (19) de la partie d'arbre extérieure (2), de sorte que la course de déplacement axiale de la partie d'arbre intérieure (3) dans la partie d'arbre extérieure (2) soit limitée dans la direction d'extraction (28), l'au moins une butée extérieure (20 à 27, 43, 44) étant introduite dans une portion d'extrémité (29) de la partie d'arbre extérieure (2) par au moins un processus de déformation, l'axe de la direction d'introduction (30) formant à chaque fois avec la direction radiale (31) de la partie d'arbre extérieure (3) un angle (32) supérieur à 20°, **caractérisé en ce que** la ou les butées extérieures (26, 27) sont à chaque fois introduites dans une région de la partie d'arbre extérieure (2) incluant la surface frontale (42) et la périphérie extérieure (36) par un processus de déformation, l'axe de la direction d'introduction (30) étant situé dans un plan incluant l'axe de rotation (15) de la partie d'arbre extérieure (2).

5. Arbre de direction pour un véhicule automobile, comprenant une partie d'arbre extérieure (2) dans laquelle est reçue de manière déplaçable axialement et en liaison de transmission de couple une partie d'arbre intérieure (3), avec au moins une butée intérieure axiale (17, 18) faisant saillie radialement vers l'extérieur depuis le côté extérieur (16) de la partie d'arbre intérieure (3), laquelle, lors du retrait de la partie d'arbre intérieure (3) hors de la partie d'arbre extérieure (2), bute contre au moins une butée extérieure axiale (20 à 27, 43, 44) faisant saillie radialement vers l'intérieur depuis le côté intérieur (19) de la partie d'arbre extérieure (2), de sorte que la course de déplacement axiale de la partie d'arbre intérieure (3) dans la partie d'arbre extérieure (2) soit limitée dans la direction d'extraction (28), l'au moins une butée extérieure (20 à 27, 43, 44) étant introduite dans une portion d'extrémité (29) de la partie d'arbre extérieure (2) par au moins un processus de déformation, l'axe de la direction d'introduction (30) formant à chaque fois avec la direction radiale (31) de la partie d'arbre extérieure (3) un angle (32) supérieur à 20°, **caractérisé en ce que** les butées extérieures (43, 44) sont à chaque fois introduites dans la région d'extrémité respective d'une denture longitudinale (13) du côté intérieur (19) de la partie d'arbre extérieure (2) par un processus de déformation, l'axe de la direction d'introduction (30) étant situé dans un plan disposé essentiellement tangentiellement au côté extérieur (16) de la partie d'arbre intérieure (3) .

6. Arbre de direction selon l'une quelconque des revendications 1 à 5, **caractérisé en ce que** deux butées intérieures (17, 18) sont disposées sur la partie d'arbre intérieure (3) et deux butées extérieures (20 à 27, 43, 44) associées aux butées intérieures (17, 18) sont disposées sur la partie d'arbre extérieure (2) dans la direction périphérique (33) à une distance de 180°.

7. Procédé de fabrication d'une sécurité anti-extraction d'un arbre de direction (1) selon la revendication 1 ou la revendication 6, lorsqu'elle dépend de la revendication 1, dans lequel une partie d'arbre intérieure (3) pourvue d'au moins une butée intérieure axiale (17, 18) faisant saillie vers l'extérieur depuis son côté extérieur (16) est enfoncée dans une partie d'arbre extérieure (2) et ensuite au moins une butée extérieure axiale (20 à 27, 43, 44) faisant saillie radialement vers l'intérieur depuis le côté intérieur (19) de la partie d'arbre extérieure (2) est formée dans la partie d'arbre extérieure (2), la butée extérieure (20 à 27, 43, 44) étant introduite par une opération de gaufrage d'un outil de formage (37 à 40, 45), l'axe de la direction d'introduction (30) dans laquelle est déplacé l'outil de formage (37 à 40, 45) formant avec la direction radiale (31) de la partie d'arbre extérieure (2) un angle (32) supérieur à 20°, **caractérisé en ce que** deux premiers outils de formage (37) agissent sur deux zones adjacentes (34, 35) de la périphérie extérieure (36) de la partie d'arbre extérieure (2), les axes des deux directions d'introduction (30) étant situés dans un plan perpendiculaire à l'axe de rotation (15) de la partie d'arbre extérieure (2) et s'intersectant en un point (41) disposé radialement entre l'axe de rotation (15) et la périphérie extérieure (36) de la partie d'arbre extérieure (2).

8. Procédé de fabrication d'une sécurité anti-extraction d'un arbre de direction (1) selon la revendication 2 ou la revendication 6 lorsqu'elle dépend de la revendication 2, dans lequel une partie d'arbre intérieure (3) pourvue d'au moins une butée intérieure axiale (17, 18) faisant saillie vers l'extérieur depuis son côté extérieur (16) est enfoncée dans une partie d'arbre extérieure (2) et ensuite au moins une butée extérieure axiale (20 à 27, 43, 44) faisant saillie radialement vers l'intérieur depuis le côté intérieur (19) de la partie d'arbre extérieure (2) est formée dans la partie d'arbre extérieure (2), la butée extérieure (20 à 27, 43, 44) étant introduite par une opération de gaufrage d'un outil de formage (37 à 40, 45), l'axe de la direction d'introduction (30) dans laquelle est déplacé l'outil de formage (37 à 40, 45) formant avec la direction radiale (31) de la partie d'arbre extérieure (2) un angle (32) supérieur à 20°, **caractérisé en ce qu'**un deuxième outil de formage (38) agit sur une surface frontale (42) de la partie d'arbre extérieure (2), l'axe de la direction d'introduction (30) étant situé dans un plan incluant l'axe de rotation (15) de la partie d'arbre extérieure (2).

9. Procédé de fabrication d'une sécurité anti-extraction d'un arbre de direction (1) selon la revendication 3 ou la revendication 6 lorsqu'elle dépend de la revendication 3, dans lequel une partie d'arbre intérieure (3) pourvue d'au moins une butée intérieure axiale (17, 18) faisant saillie vers l'extérieur depuis son côté extérieur (16) est enfoncée dans une partie d'arbre extérieure (2) et ensuite au moins une butée extérieure axiale (20 à 27, 43, 44) faisant saillie radialement vers l'intérieur depuis le côté intérieur (19) de la partie d'arbre extérieure (2) est formée dans la partie d'arbre extérieure (2), la butée extérieure (20 à 27, 43, 44) étant introduite par une opération de gaufrage d'un outil de formage (37 à 40, 45), l'axe de la direction d'introduction (30) dans laquelle est déplacé l'outil de formage (37 à 40, 45) formant avec la direction radiale (31) de la partie d'arbre extérieure (2) un angle (32) supérieur à 20°, **caractérisé en ce qu'**un troisième outil de formage (39) agit sur la périphérie extérieure (36) de la partie d'arbre extérieure (2), l'axe de la direction d'introduction (30) étant situé dans un plan incluant l'axe de rotation (15) de la partie d'arbre extérieure (2) .

10. Procédé de fabrication d'une sécurité anti-extraction d'un arbre de direction (1) selon la revendication 4 ou la revendication 6 lorsqu'elle dépend de la revendication 4, dans lequel une partie d'arbre intérieure (3) pourvue d'au moins une butée intérieure axiale (17, 18) faisant saillie vers l'extérieur depuis son côté extérieur (16) est enfoncée dans une partie d'arbre extérieure (2) et ensuite au moins une butée extérieure axiale (20 à 27, 43, 44) faisant saillie radialement vers l'intérieur depuis le côté intérieur (19) de la partie d'arbre extérieure (2) est formée dans la partie d'arbre extérieure (2), la butée extérieure (20 à 27, 43, 44) étant introduite par une opération de gaufrage d'un outil de formage (37 à 40, 45), l'axe de la direction d'introduction (30) dans laquelle est déplacé l'outil de formage (37 à 40, 45) formant avec la direction radiale (31) de la partie d'arbre extérieure (2) un angle (32) supérieur à 20°, **caractérisé en ce qu'**un quatrième outil de formage (40) agit sur une région de la partie d'arbre extérieure (2) incluant la périphérie extérieure (36) et la surface frontale (42) de la partie d'arbre extérieure (2), l'axe de la direction d'introduction (30) étant situé dans un plan incluant l'axe de rotation (15) de la partie d'arbre extérieure (2).

11. Procédé de fabrication d'une sécurité anti-extraction d'un arbre de direction (1) selon la revendication 5 ou la revendication 6 lorsqu'elle dépend de la revendication 5, dans lequel une partie d'arbre intérieure (3) pourvue d'au moins une butée intérieure axiale (17, 18) faisant saillie vers l'extérieur depuis son côté extérieur (16) est enfoncée dans une partie d'arbre extérieure (2) et ensuite au moins une butée extérieure axiale (20 à 27, 43, 44) faisant saillie radialement vers l'intérieur depuis le côté intérieur (19) de la partie d'arbre extérieure (2) est formée dans la partie d'arbre extérieure (2), la butée extérieure (20 à 27, 43, 44) étant introduite par une opération de gaufrage d'un outil de formage (37 à 40, 45), l'axe de la direction d'introduction (30) dans laquelle est déplacé l'outil de formage (37 à 40, 45) formant avec la direction radiale (31) de la partie d'arbre extérieure (2) un angle (32) supérieur à 20°, **caractérisé en ce qu'**un cinquième outil de formage (45) agit sur une région d'extrémité d'une denture longitudinale (13) sur le côté intérieur (19) de la partie d'arbre extérieure (2), l'axe de la direction d'introduction (30) étant situé dans un plan disposé essentiellement tangentiellement au côté extérieur (16) de la partie d'arbre intérieure (3).

12. Procédé selon la revendication 11, **caractérisé en ce que** deux processus de déformation sont réalisés au niveau de deux dentures longitudinales adjacentes (13) par deux outils de déformation (45), les directions d'introduction respectives (30) formant ensemble un angle supérieur à 90°.

13. Procédé selon l'une quelconque des revendications 7 à 11, **caractérisé en ce que** dans la partie d'arbre extérieure (2) sont formées deux butées extérieures (20 à 27, 43, 44) disposées à une distance de 180° dans la direction périphérique (33).
